Europäisches Patentamt

European Patent Office

Office européen des brevets

(11) Veröffentlichungsnummer: **0 118 827**
**B1**

(12) # EUROPÄISCHE PATENTSCHRIFT

(45) Veröffentlichungstag der Patentschrift:
10.05.89

(51) Int. Cl.⁴: **G 01 N 23/18**

(21) Anmeldenummer: **84102090.2**

(22) Anmeldetag: **29.02.84**

(54) Radiometrie-System zum Materialprüfen.

(30) Priorität: **11.03.83 DE 3308607**

(43) Veröffentlichungstag der Anmeldung:
**19.09.84 Patentblatt 84/38**

(45) Bekanntmachung des Hinweises auf die Patenterteilung:
**10.05.89 Patentblatt 89/19**

(84) Benannte Vertragsstaaten:
**DE FR GB IT NL**

(56) Entgegenhaltungen:
FR-A-2 096 138
GB-A-1 038 711
US-A-4 422 177

THE SOVIET JOURNAL OF NONDESTRUCTIVE
TESTING, Band 10, no. 4, Juli/August 1974, pp. 421-
423, Plenum Publishing Corporation, NEW YORK
(US), I. SEREBRENNIKOV et al.: "A method of
radiometric flaw detection"
THE SOVIET JOURNAL OF NONDESTRUCTIVE
TESTING, Band 10, no. 4, Juli/August 1974, pp. 417-
420, Plenum Publishing Corporation, NEW YORK
(US), Yu.V. GROMOV et al.: "A television-type
gamma-ray flaw detector"

(73) Patentinhaber: **Sauerwein, Kurt, Dr., Bergische
Strasse 16, D-5657 Haan 1 (DE)**

(72) Erfinder: **Sauerwein, Kurt, Dr., Kattendahl 7,
D-4006 Erkrath 2 (DE)**
Erfinder: **Link, Rainer, Dr., Buchenhöhe 1, D-5159
Kerpen- Horrem (DE)**
Erfinder: **Nuding, Wolfgang, Dr., Kirchstrasse 26,
D-5210 Troisdorf (DE)**

(74) Vertreter: **König, Reimar, Dr.- Ing., Patentanwälte
Dr.- Ing. Reimar König Dipl.- Ing. Klaus Bergen
Wilhelm- Tell- Strasse 14 Postfach 260162, D-4000
Düsseldorf 1 (DE)**

## Beschreibung

Die Erfindung betrifft ein Verfahren zum Materialprüfen mittels eines Radiometrie-Systems, bei dem eine punktförmige Strahlenquelle für Gamma-Strahlen und ein nach dem Strahlengang justierter, im Einzelimpuls betriebener Strahlendetektor relativ zu einem durchstrahlten Objekt synchron bewegt werden und die Strahlungsimpulse pro Meßpunkt energiediskriminiert und einem Bilddarstellungssystem zugeführt werden, sowie eine Vorrichtung zum Durchführen des Verfahrens mit einer Strahlenquelle für Gamma-Strahlen, einem auf der anderen Werkstückseite angeordneten Szintilations- oder Halbleiterkristall-Detektor mit einstellbarer Blendenöffnung, einem Manipulator zur synchronen Bewegungssteuerung der Strahlenquelle und des Detektors, einem Verstärker und einem Energiediskriminator.

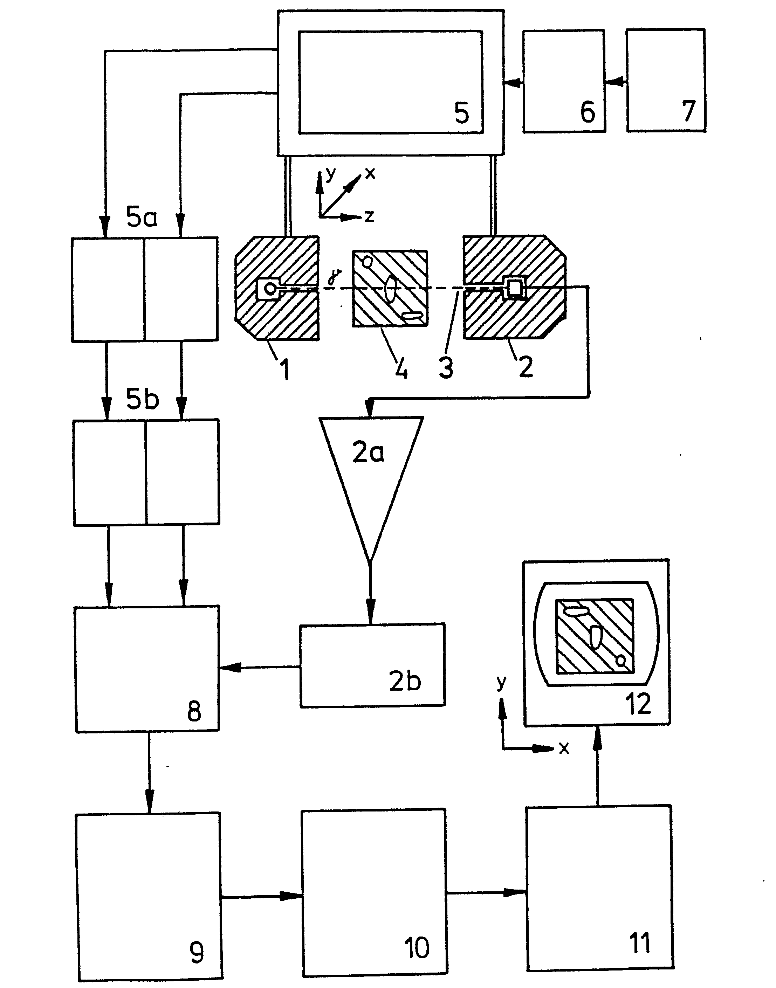

In der britischen Patentschrift 1 038 711 sind ein Verfahren und eine Vorrichtung der eingangs erwähnten Art beschrieben, die ein rein elektromechanisches mit elektronischen Analogschaltkreisen arbeitendes System benutzen, bei dem eine Drehung des Objekts um 360° eine Zeile in der Abbildung des Bilddarstellungssystems ergibt. Das aus 320 Zeilen zusammengesetzte Bild entspricht nicht einem üblichen, beispielsweise auf einem Fluorescenzschirm abgebildeten zweidimensionalen Durchstrahlungsbild des zu prüfenden Objektes, sondern ergibt nur eine Darstellung von eingeschlossenen Inhomogenitäten, die umso breiter ist, je näher sie zur Drehachse des zu prüfenden Objektes liegen. Die Darstellung des zu prüfenden, durchstrahlten Objektes ist daher interpretationsbedürftig.

Es handelt sich hier um eine punktförmige Durchstrahlungsmessung zum Materialprüfen nach einem eindimensionalen Verfahren mit einer Auswertung der Strahlungsmessung auf einem Schreiberdiagramm. Zwar ist das Auflösungsvermögen im Gegensatz zur flächenhaften Durchstrahlungsmessung, bei dem die Schwächung der das Objekt durchstrahlenden Gamma- oder Röntgenstrahlen mit einem Röntgen- oder fluoreszierenden Schirm als flächiges Bild sichtbar gemacht wird, besser, selbst wenn derartige flächige Bilder nach Digitalisierung der Grauwerte des in kleinste Flächenelemente zerlegten Bildes rechnergestützt ausgerechnet werden. Die hierbei erreichbare maximale Auflösung beträgt im Falle der nuklearmedizinischen Szintigraphie gemäß "Umschau" 82, Heft 23, Seitten 710 bis 715, etwa 10 mm, was bei der Materialprüfung nicht ausreichend ist.

Der Erfindung liegt daher die Aufgabe zugrunde, ein Verfahren und eine Vorrichtung der eingangs erwähnten Art so zu verbessern, daß ein zweidimensionales flächenhaftes Bild erzeugt wird und zur Wiederholungsprüfung von Kernkraftwerkskomponenten bei hohem Streustrahlungshintergrund und zur Prüfung radioaktiv kontaminierter Komponenten geeignet ist. Diese Aufgabe wird dadurch gelöst, daß erfindungsgemäß die Strahlenquelle und der Strahldetektor zeilen- und spaltenweise quer zur Durchstrahlungsrichtung bewegt, die Ortskoordinaten eines jeden Durchstrahlungspunktes in digitale Ortswerte umgewandelt und einem Zwei-Ebenen-Matrix-Speicher als Speicheradresse zugeführt, die im Detektor aufgefangenen und versträkten Strahlungsimpulse energiediskriminiert oberhalb einer vorgegeben Zählrate in die jeweilige, gerade anliegende Speicheradresse eingezählt und registriert sowie in einem nachgeordneten digitalen Bildverarbeitungssystem in den Zählraten entsprechende Grau- oder Farbwerte umgewandelt und auf einem Bildschirmgerät dargestellt werden.

Auf diese Weise ist eine rechnergestützte Bildauswertung mit hohem Auflösevermögen und die Anwendung vor allem höher energetischer Gamma-Strahlung wie Ir 192 oder Co 60 möglich, so daß sich auch relativ dicke Objekte wie Metalle von einigen Zehn bis einigen Hundert Milimetern Dicke zerstörungsfrei untersuchen lassen. Das erfindungsgemäße Radiometrie-System arbeitet vorzugsweise völlig automatisch, so daß das Personal auf einfache Weise vor einer unzuträglich hohen Strahlenbelastung geschützt ist.

Zum unmittelbaren Betrachten des Bestrahlungsbildes werden erfindungsgemäß die einzelnen Durchstrahlungsmeßwerte als unterschiedlich Grau- oder Farbtöne einem Bildverarbeitungssystem zugeführt. Diese Bilder lassen sich jederzeit vom Elektronenrechner abfragen und auf einem Kathodenstrahlbildschirm darstellen. Hierzu weist die Vorrichtung einen Zwei-Ebenen-Matrix-Speicher für die digitalen Ortskoordinaten und die zugeordneten Zählimpulse sowie einen Rechner mit einem geschlossenen Bildverarbeitungsgerät auf.

Die Erfindung wird nachfolgend anhand eines in der Zeichnung dargestellten Ausführungsbeispiels des näheren erläutert.

Die Zeichnung zeigt ein Funktionsschema des erfindungsgemäßen Radiometrie-Systems.

Ein punktförmiger Kobalt-60-Strahler 1 liefert einen punktförmigen Gammastrahl, der von einem Strahlendetektor 2 mit einer einstellbaren Blendenöffnung 3, beispielsweise einem Szintillations- oder Halbleiterkristall-Detektor aufgefangen wird; er ist nach dem Strahlengang des Strahlers 1 exakt justiert. Zwischen den Strahler 1 und den Detektor 2 wird das zu durchstrahlende Objekt 4 in den Strahlengang eingeschoben. Ein Manipulator 5 bewegt den Strahler 1 und den Detektor 2 synchron in den Koordinatenrichtungen X, Y und Z, ohne daß sich die Detektorjustierung dabei verändert.

Als Antrieb des Manipulators 5 dienen ein oder mehrere Motoren 6 mit einer Steuerung 7 für die drei Koordinatenrichtungen. Demgemäß lassen sich nach dem Justieren der Z-Koordinate alle X- und Y-Orte der vorgegebenen Objektfläche streifen- und zeilenförmig abfahren.

Die analog am Manipulator 5 abgreifbaren X- und Y-Werte $X_A$ und $Y_A$ (5a in der Zeichnung) werden in digitale Ortswerte $X_D$ und $Y_D$ (5b in der Zeichnung) ungewandelt und über ein Interface 8 einem Zwei-Ebenen-Matrix-Speicher 9 zugeführt. Dieser Speicher gestattet beispielsweise eine Auflösung von 512 x 512 Punkten.

Die in dem Detektor 2 aufgefangenen Strahlungsimpulse werden im Verstärker 2a verstärkt, im Energiediskriminator 2b energiediskriminiert und in die jeweilige, gerade anliegende Speicheradresse mit Hilfe des Interface 8 eingezählt. Die Energiediskriminierung ermöglicht u. a. die Trennung der bildgebenden von der Hintergrund- und Streustrahlung. Auf diese Weise ergibt sich eine zweidimensionale Zählratenverteilung, die von einem dem Speicher 9 nachgeordneten Elektronenrechner 10 derart normiert wird, daß verschiedenen Zählraten verschiedene Grau- oder Farbwerte zugeordnet werden. Diese Grau- oder Farbverteilung wird dem Bildspeicher eines Bildverarbeitungsgerätes 11 zugeführt und bei Bedarf auf einem Bildschirmgerät 12 dargestellt.

Auf diese Weise ist es möglich, sieben auf einen 20 cm dicken Eisenquader aufgelegte sogenannte DIN-Stege klar und deutlich zu erkennen. Die Bildgüteklasse ist demnach besser als I gemäß DIN 54109. Die Aufnahmedauer betrug 3 Stunden und die Blendenöffnung des Detektors 2 ca. 0,5 mm. Höhere Ortsauflösungen sind mit kleineren Blenden und größerer Aufnahmedauer möglich.

**Patentansprüche**

1. Verfahren zum Materialprüfen mittels eines Radiometrie-Systems, bei dem eine punktförmige Strahlenquelle (1) für Gammastrahlen und ein nach dem Strahlengang justierter, im Einzelimpulsbetrieb betriebener Strahlendetektor (2) relativ zu einem durchstrahlten Objekt (4) synchron bewegt werden und die Strahlungsimpulse pro Meßpunkt energiediskriminiert und einem Bilddarstellungssystem (11, 12) zugeführt werden, dadurch gekennzeichnet, daß die Strahlenquelle (1) un der Strahlendetektor (2) zeilen- und spaltenweise quer zur Durchstrahlungsrichtung bewegt, die Ortskoordinaten eines jeden Durchstrahlungspunktes in digitale Ortsweise umgewandelt und einem Zwei-Ebenen-Matrix-Speicher (9) als Speicheradresse zugeführt, die im Detektor (2) aufgefangenen und verstärkten Strahlungsimpulse energiediskriminiert oberhalb einer vorgegebenen Zählrate in die jeweilige, gerade anliegende Speicheradresse eingezählt und registriert sowie in einem nachgeordneten digitalen Bildverarbeitungssystem (10, 11) in den Zählraten entsprechende Grau- oder Farbwerte umgewandelt und auf einem Bildschirmgerät (12) dargestellt werden.

2. Vorrichtung zur Durchführung des Verfahrens nach Anspruch 1 mit einer Strahlenquelle für Gammastrahlen (1), einem auf der anderen Werkstückseite angeordneten Szintillations- oder Halbleiterkristall-Detektor (2) mit einstellbarer Blendenöffnung (3), einem Manipulator (5) zur synchronen Bewegungssteuerung der Strahlenquelle (1) und des Detektors (2), einem Verstärker (2a) und einem Energiediskriminator (2b), gekennzeichnet durch einen Zwei-Ebenen-Matrix-Speicher (9) für die digitalen Ortskoordinaten und die zugeordneten Zählimpulse sowie einen Rechner (10) mit angeschlossenem Bildverarbeitungsgerät (11).

**Claims**

1. A process for testing materials by means of a radiometric system wherein a point source of gamma-ray radiation and a radiation detector aligned according to the radiation path and operating in single-shot pulse mode are moved synchronously relative to an irradiated object (4) and the radiation pulses per measuring point are energy-discriminated and supplied to an image display system (11, 12), characterized in that the radiation source (1) and the radiation detector (2) are moved row-wise and column-wise transverse to the direction of irradiation, the spatial coordinates of each irradiation point are converted to digital spatial values and supplied to a two-level matrix store (9) as storage addresses, the radiation pulses picked up and amplified in the detector (2), energy-discriminated above a predetermined counting rate, are counted into the respective directly adjacent storage addresses and recorded and are converted in a subsequent digital image processing system (10, 11) into the grey or colour values corresponding to the counting rates and are displayed on a screen display unit (12).

2. Apparatus for carrying out the process according to claim 1 having a source of gamma-ray radiation (1), a scintillation or semi-conductor crystal detector (2) with an adjustable aperture (3) arranged on the other side of the workpiece, a manipulator (5) for synchronous control of the movement of the radiation source (1) and the detector (2), an amplifier (2a) and an energy discriminator (2b), characterized by a two-level matrix store (9) for the digital spatial coordinates and the associated counting pulses, and a computer (10) with an image processing device (11) connected thereto.

## Revendications

1. Procédé d'examen des matériaux au moyen d'un système de radiométrie, dans lequel une source ponctuelle (1) de rayons gamma et un détecteur de rayons (2) réglé suivant le trajet des rayons, et mis en action par impulsion individuelle sont déplacés en synchronisme par rapport à un objet (4) traversé par les rayons et dans lequel les impulsions de rayonnement font l'objet d'une discrimination d'énergie par point de mesure et sont envoyées à un système de représentation d'images (11, 12), caractérisé en ce que la source de rayons (1) et le détecteur de rayons (2) sont déplacés suivant des lignes et des colonnes transversalement par rapport à la direction de passage des rayons, que les coordonnées de chaque point de passage de rayons sont transformées en valeurs numérique de positionnement et envoyees, comme adresses de mémoire, à une mémoire à matrice (9) à deux plans, que les impulsions de rayonnement captées dans le détecteur (2) et amplifiées font l'objet d'une discrimination d'énergie et sont, au-dessus d'un taux de comptage déterminé, comptées et enregistrées dans l'adresse de mémoire correspondante située à proximité et, dans un système numérique de traitement des images (10, 11) placé à la suite, transformées en valeurs de gris ou de couleurs correspondant aux taux de comptage et représentées sur un dispositif à écran (12).

2. Dispositif pour l'application du procédé selon la revendication 1, comportant une source 1 de rayons gamma, un détecteur (2) à scintillation ou à cristaux semi-conducteurs placé de l'autre côté de la pièce et comportant une ouverture de diaphragme (3) réglable, un manipulateur (5) pour la commande en synchronisme des déplacements de la source de rayons (1) et du détecteur (2), un amplificateur (2a) et un discriminateur d'énergie (2b) caractérisé par une mémoire à matrice (9) à deux plans pour les coordonnées numériques de positionnement et pour les impulsions de comptage correspondantes et par un calculateur (10) comportant un dispositif (11) de traitement des images associé.